# EUROPEAN PATENT SPECIFICATION

(11) **EP 3 324 180 B1**
(45) Date of publication and mention of the grant of the patent: **20.09.2023**
(21) Application number: 16824194.1
(22) Date of filing: 15.06.2016
(51) Int. Cl.: G01N 27/87, G01B 7/06, G01B 7/26

(54) **DEFECT MEASUREMENT METHOD AND TESTING PROBE**
DEFEKTMESSUNGSVERFAHREN UND PRÜFSONDE
PROCÉDÉ DE MESURE DE DÉFAUTS ET SONDE D'ANALYSE

(30) Priority: 16.07.2015 JP 2015142389
(43) Date of publication of application: 23.05.2018
(73) Proprietor: Sumitomo Chemical Company, Ltd., Chuo-ku Tokyo 104-8260 (JP)
(72) Inventor: TADA, Toyokazu, Niihama-shi Ehime 792-8521 (JP); SUETSUGU, Hidehiko, Niihama-shi Ehime 792-8521 (JP)
(74) Representative: Vossius & Partner Patentanwälte Rechtsanwälte mbB
(86) International application number: PCT/JP2016/067807
(87) International publication number: WO 2017/010214

(56) References cited:
- CN-A- 103 149 272
- JP-A- H0 353 155
- JP-A- S6 340 850
- JP-A- H02 210 256
- JP-A- H08 136 508
- JP-A- H09 188 496
- JP-A- 2000 105 273
- JP-A- 2002 005 893
- JP-A- 2004 279 372
- JP-A- 2009 122 074
- JP-A- 2009 287 931
- JP-A- 2012 103 177
- RU-C1- 2 440 493
- US-A- 4 789 827
- US-A1- 2005 200 354

## Description

### Technical Field

The present invention relates to (i) a method and (ii) an inspection probe for use in measurement of the defect.

### Background Art

As an inspection method for investigating the presence/absence of a defect in a magnetic member such as thinning or crack, a magnetic flux leakage (MFL) and the like disclosed in Patent Literature 1 and the like have been conventionally known.

For example, according to Patent Literature 1, an inspection pig including an electromagnet and a magnetic sensor determines the presence/absence of a defect in a pipe portion by (i) magnetizing the pipe portion, which is an object to be inspected, so that the pipe portion reaches magnetic saturation and (ii) detecting, with use of the magnetic sensor, a leakage flux which is leaking from the pipe portion. Citation List

### [Patent Literature]

[Patent Literature 1]
Japanese Patent Application Publication Tokukai No. 2004-212161 Publication date: July 29, 2004).

US2005/200354 A1, CN103149272 A, RU2440493 C1, US4789827 A and JP2000105273 A disclose devices for detecting defects in magnetic members.

### Summary of Invention

### Technical Problem

However, although the presence/absence of a defect is determined on the basis of a leakage flux which is leaking from a pipe portion according to the magnetic flux leakage, a leakage of a magnetic flux occurs only at portions where a shape of the pipe portion is discontinuous, such as an end part of the defect. Therefore, a leakage of a magnetic flux does not occur in a case where (i) thinning is occurring over an entire circumference of a pipe or (ii) thinning is occurring gradually. This unfortunately makes it impossible to detect a defect. In addition, although the presence/absence of a defect can be determined on the basis of a leakage of a magnetic flux according to the magnetic flux leakage, the magnetic flux leakage unfortunately does not make it possible to quantitatively measure a depth or the like of the defect.

The present invention has been made in view of the problems, and it is an object of the present invention to quantitatively measure a defect in a magnetic member.

### Solution to Problem

A defect measuring method in accordance with an aspect of the present invention is a method of measuring a defect of a magnetic member so as to inspect the defect, including the steps as defined in independent claim 1.

An inspection probe in accordance with an aspect of the present invention is defined in independent claim 3.

A defect measuring device in accordance with an aspect of the present invention is as set out in dependent claim 5.

### Advantageous Effects of Invention

With a defect measuring method and an inspection probe in accordance with an embodiment of the present invention, it is thus possible to quantitatively measure a defect of a magnetic member.

### Brief Description of Drawings

Fig. 1 is a view schematically illustrating a configuration of an inspection probe for use in a thinning measuring device in accordance with an embodiment of the present invention.
Fig. 2 is a view schematically illustrating a state of the inspection probe of Fig. 1 during measurement of thinning.
Fig. 3 is a view illustrating a relationship between (i) a voltage outputted from a Hall element included in the inspection probe of Fig. 1 and (ii) a thinning rate of a magnetic pipe.
   (a) and (b) of Fig. 4 are views illustrating a relationship between (i) an external magnetic field H, (ii) a magnetic flux density B applied to a magnetic pipe located in the external magnetic field H, and (iii) a relative permeability µ of the magnetic pipe obtained from a relationship, B=µH.
   (a) and (b) of Fig. 5 are views illustrating a plurality of test pieces each of which is thinned. (a) of Fig. 5 shows test pieces each of which has an entire surface thinned. (b) of Fig. 5 shows test pieces each of which locally has a thinned portion.

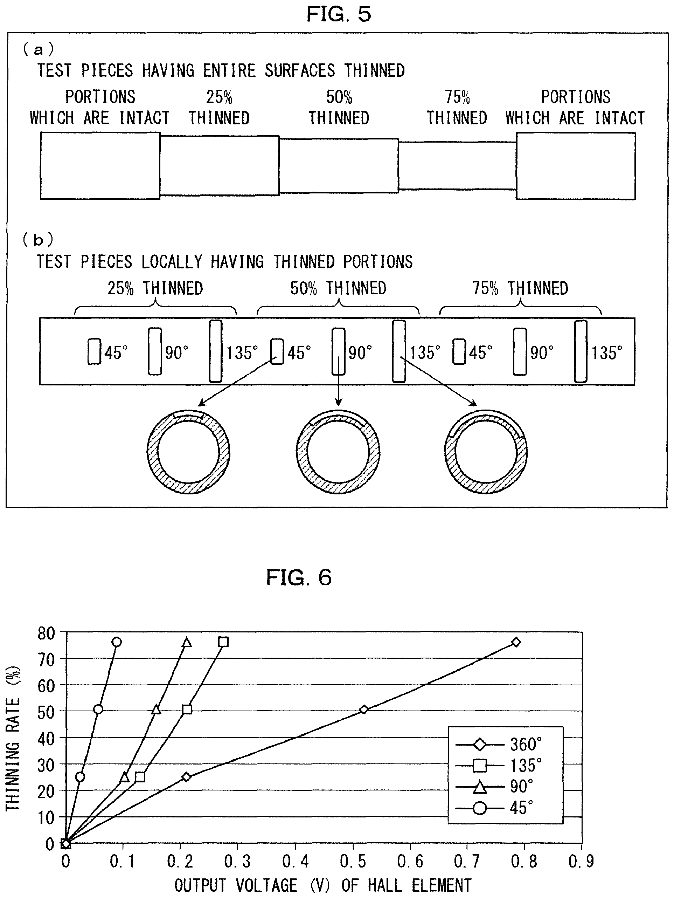

Fig. 6 is a view illustrating relationships between (i) output voltages of Hall elements of the test pieces illustrated in (a) and (b) of Fig. 5 and (ii) respective thinning rates and corresponding thinned ranges of magnetic pipes.

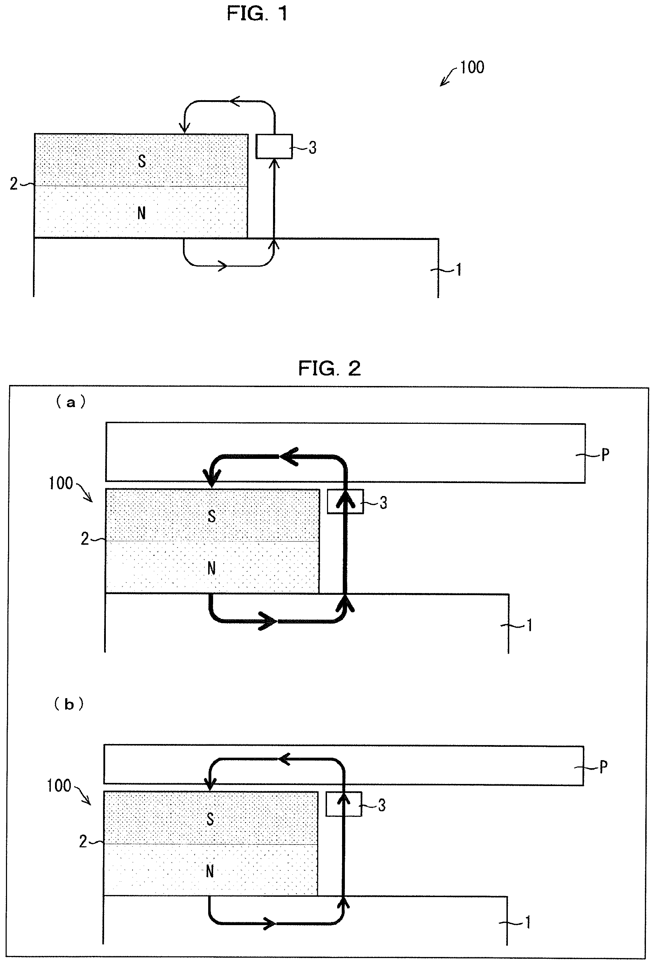

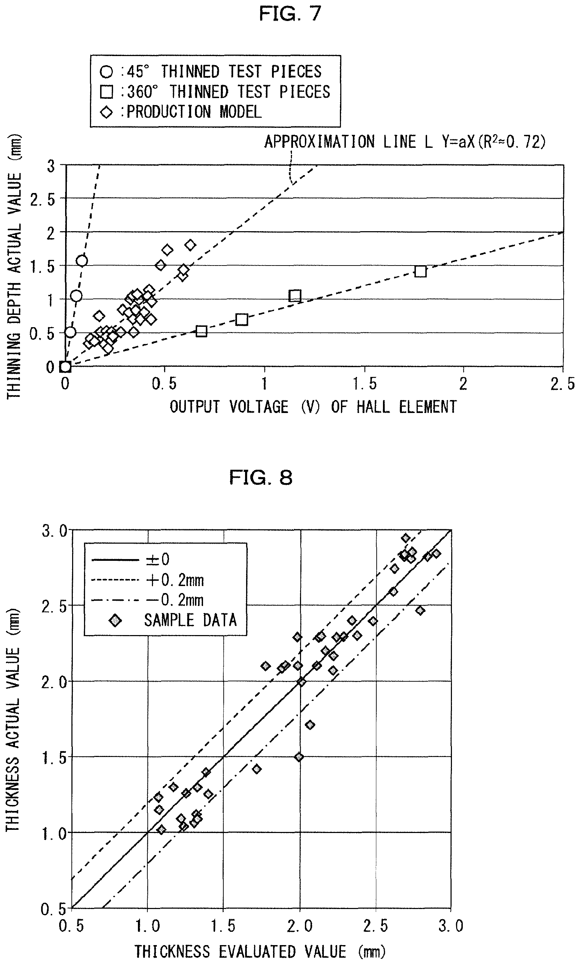

Fig. 7 is a view illustrating relationships between (i) output voltages of Hall elements which are included respective inspection probes such as that illustrated in Fig. 1 and which are in the test pieces illustrated in (a) and (b) of Fig. 5 and in magnetic pipes used in actual production models and (ii) corresponding actual values of thinning depths.
Fig. 8 is a view illustrating relationships between thickness evaluated values and thickness actual values in inspection probes such as that illustrated in Fig. 1.

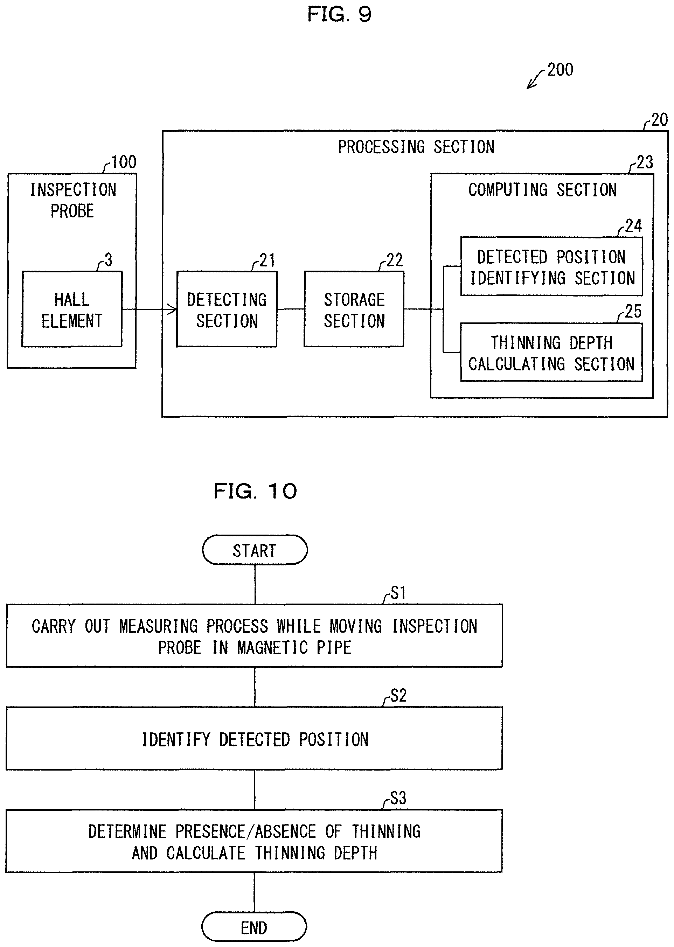

Fig. 9 is a block diagram illustrating a configuration of a processing section which is included in a thinning measuring device in accordance with an embodiment of the present invention.
Fig. 10 is a flow chart illustrating a flow of a process carried out by a thinning measuring device in accordance with an embodiment of the present invention.

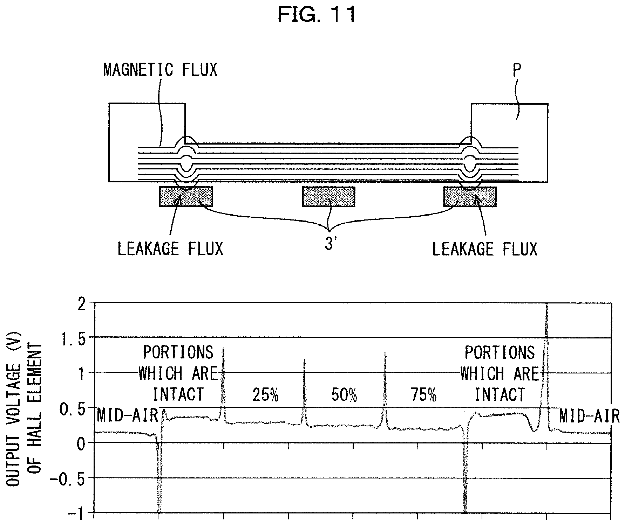

Fig. 11 is a view illustrating a relationship between a voltage of an output from a Hall element and a thinning rate of a magnetic pipe during a magnetic flux leakage.

### Description of Embodiments

A magnetic member in accordance with an embodiment of the present invention is a member made of a magnetic material. Examples of the magnetic member encompass a cable, a wire, a plate-like member, and various structures, each of which is made of a magnetic material. Examples of a defect of the magnetic member encompass a thinned portion (hereinafter referred to as "thinning") and a crack. The thinning is a phenomenon in which a thickness of a member or the like is thinned by mechanical abrasion and/or chemical corrosion.

The following description will discuss an embodiment of the present invention. According to the present embodiment, thinning of a magnetic pipe, which serves as a magnetic member to be inspected, is inspected with use of a Hall element serving as a magnetic sensor. However, the present invention is not limited to the present embodiment, and can be applied to more than a magnetic pipe and an inspection of thinning.

According to the present embodiment, (i) a depth of a defect extending in directions in which a magnetic member and a magnet according to an embodiment of the present invention face each other will be referred to as "thinning depth", (ii) presence/absence of a defect is determined according to an output from a magnetic sensor in accordance with an embodiment of the present invention, (iii) a defect depth calculating section, which calculates a depth of a defect extending in the directions in which the magnetic member and the magnet face each other, will be referred to as "thinning depth calculating section", and (iv) a defect measuring device in accordance with an embodiment of the present invention will be referred to as "thinning measuring device".

### (1. Configuration of inspection probe 100)

Fig. 1 is a view schematically illustrating a configuration of an inspection probe 100 in accordance with the present embodiment.

According to the present embodiment, thinning of a magnetic pipe is inspected by the Magnetic Flux Resistance (MFR) (described later) through inserting the inspection probe 100 into the magnetic pipe and moving the inspection probe 100 in the magnetic pipe. Examples of the magnetic pipe to be inspected encompass pipes made of magnetic materials such as: carbon steel; ferritic stainless steel; and two-phase stainless steel having two phases which are a ferrite phase and an austenite phase.

As illustrated in Fig. 1, the inspection probe 100 includes a magnet 2, a Hall element 3, and a yoke 1.

The yoke 1 is a hollow cylindrical member made of a magnetic material. Examples of the magnetic material of which the yoke 1 is made encompass high permeability metals such as carbon steel and low alloy steel. A shape of the yoke 1 is not particularly limited, and can be, for example, a rod-like shape, a plate-like shape, or a circular columnar shape.

The magnet 2 is provided along an outer circumferential surface of the yoke 1. The magnet 2 is arranged so that magnetic poles of the magnet 2 are in line with radii of the magnetic pipe such that in a case where the inspection probe 100 is inserted into the magnetic pipe, (i) one magnetic pole of the magnet 2 faces the yoke 1 and (ii) the other (opposite) magnetic pole faces the magnetic pipe. That is, the magnet 2 is polarized in a direction in which the magnet 2 faces the magnetic pipe. Fig. 1 shows an example in which an N pole and an S pole of the magnet 2 are provided so as to face the yoke 1 and the magnetic pipe, respectively. However, the present invention is not limited to this example, and can be configured so that the S pole and the N pole are provided so as to face the yoke 1 and the magnetic pipe, respectively.

As indicated by arrows in Fig. 1, the magnet 2 and the yoke 1 form a magnetic circuit. The Hall element 3 is provided on the magnetic circuit. Fig. 1 shows an example in which the Hall element 3 is provided at an end part of the magnet 2 along an axial direction of the magnetic pipe. The Hall element 3 is also provided so that an output voltage of the Hall element 3 decreases in a case where a magnetic resistance decreases and consequently a density of a magnetic flux passing through the Hall element 3 increases.

### (2. Overview of Magnetic Flux Resistance)

Fig. 2 is a view schematically illustrating the inspection probe 100 during measurement of thinning of a magnetic pipe P. (a) of Fig. 2 shows that thinning of the magnetic pipe P is not occurring, and (b) of Fig. 2 shows that thinning of the magnetic pipe P is occurring. In a case where the inspection probe 100 in accordance with the present embodiment is inserted into the magnetic pipe P, a magnetic circuit is formed by (i) the magnet 2 of the inspection probe 100, (ii) the yoke 1 of the inspection probe 100, and (iii) the magnetic pipe P. In a case where thinning of the magnetic pipe P is not occurring as illustrated in (a) of Fig. 2, a thickness of the magnetic pipe P is large. This causes a magnetic resistance in the magnetic circuit to be small, and therefore causes a density of a magnetic flux passing through the Hall element 3 to be large. In contrast, in a case where thinning of the magnetic pipe P is occurring as illustrated in (b) of Fig. 2, the thickness of the magnetic pipe P is smaller in comparison with the state illustrated in (a) of Fig. 2. This causes the magnetic resistance in the magnetic circuit to be large. Therefore, the density of the magnetic flux passing through the Hall element 3 is smaller in comparison with the state illustrated in (a) of Fig. 2. Note that an output voltage of the Hall element 3 varies according to a quantity of the density of the magnetic flux passing through the Hall element 3. Therefore, the output voltage of the Hall element 3 is measured while the Hall element 3 is arranged so that the output voltage of the Hall element 3 decreases in a case where the density of the magnetic flux passing through the Hall element 3 is large. In this way, the presence/absence of thinning of the magnetic pipe P is determined, and a thickness and a thinning depth of the magnetic pipe P are calculated. Note that the thickness of the magnetic pipe P in the present embodiment is a thickness of the magnetic pipe P, which thickness extends in directions in which the magnetic pipe P and the magnet 2 face each other.

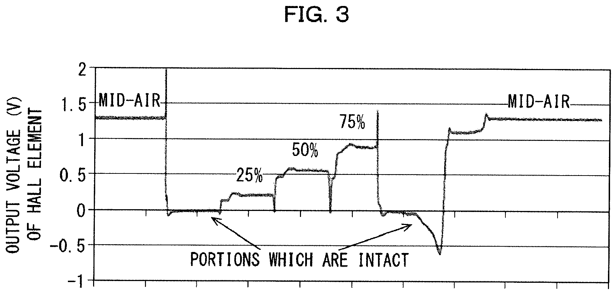

Fig. 3 is a view illustrating a relationship between (i) a voltage outputted from the Hall element 3 and (ii) a thinning rate of the magnetic pipe P. In Fig. 3, an output voltage of the Hall element 3 in a case where the magnetic pipe P is intact so that thinning of the magnetic pipe P is not occurring is 0 V. For comparison, Fig. 11 illustrates a relationship between a voltage of an output from the Hall element 3' and a thinning rate of a magnetic pipe P during a magnetic flux leakage.

As illustrated in Fig. 3, in a case where the inspection probe 100 is in mid-air, that is, in a case where the magnetic pipe P to be inspected is not present in a magnetic circuit, a magnetic resistance in the magnetic circuit is large. This causes a density of the magnetic flux passing through the Hall element 3 to be small, and therefore causes a value of an output voltage of the Hall element 3 to be large. In contrast, in a case where the inspection probe 100 is located in the magnetic pipe P and where thinning of the magnetic pipe P is not occurring, a magnetic resistance in a magnetic circuit is small as described above, and therefore a value of an output voltage of the Hall element 3 is small. In a case where the thinning of the magnetic pipe P is occurring, the Hall element 3 outputs a voltage according to the thinning rate. For example, in a case where thinning of the magnetic pipe P is occurring at thinning rates of 25%, 50%, and 75%, the Hall element 3 outputs voltages according to the respective thinning rates. Note that "thinning rate" according to the present embodiment is a value of a ratio of a thickness of a magnetic pipe P which is intact to a depth of a thinned portion extending in directions in which the magnetic pipe P and a magnet 2 face each other. For example, in a case where the thinning rate of a magnetic pipe P is 75%, the thickness of the magnetic pipe P is 1/4 of that of the magnetic pipe P which is intact.

In contrast, according to the magnetic flux leakage illustrated in Fig. 11, leakage of a magnetic flux occurs only at portions where a shape of the magnetic pipe P is discontinuous. This causes an output voltage of the Hall element 3' to vary only at the portions where the shape of the magnetic pipe P is discontinuous. In addition, the thickness and the thinning depth of the magnetic pipe P cannot be calculated from the output voltage of the Hall element 3'.

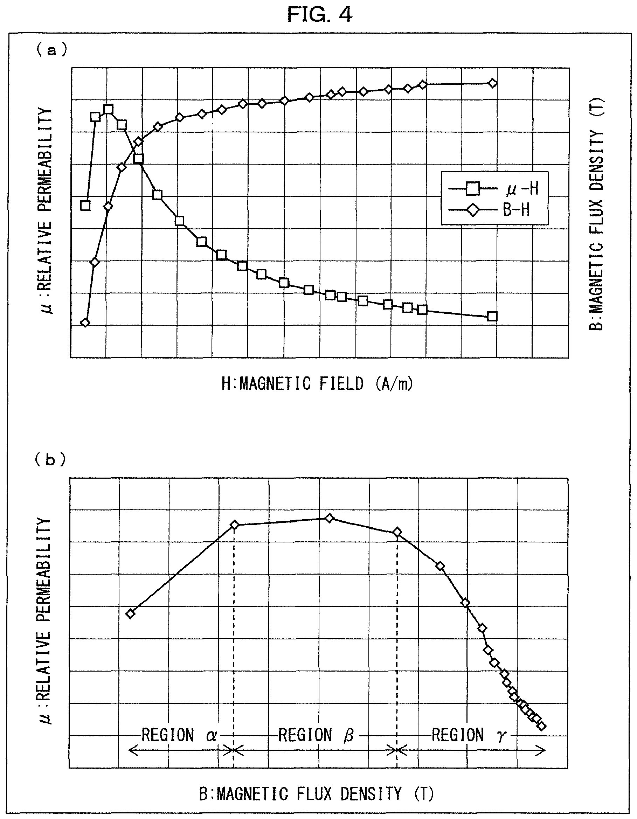

Fig. 4 is a view illustrating a relationship between (i) an external magnetic field H, (ii) a magnetic flux density B applied to a magnetic pipe P located in the external magnetic field H, and (iii) a relative permeability µ of the magnetic pipe P obtained from a relationship, B=µH. (a) of Fig. 4 illustrates the relationship where the horizontal axis shows the external magnetic field H and the vertical axis shows the relative permeability µ and the magnetic flux density B. (b) of Fig. 4 shows the relationship where the horizontal axis shows the magnetic flux density B and the vertical axis shows the relative permeability µ.

As illustrated in (b) of Fig. 4, a region where the magnetic flux density B is small (region α in (b) of Fig. 4) is a region where magnetic noise occurs so that the relative permeability µ is unstable. In addition, a region where the magnetic flux density B is at a moderate level (region β in (b) of Fig. 4) is a region which is unsuitable for measurement of a thinning rate of the magnetic pipe P with use of the Hall element 3 because, in the region, although magnetic noise is suppressed, a variance in the relative permeability µ is small despite an increase in the magnetic flux density B.

In contrast, a region where the magnetic flux density is large (region γ in (b) of Fig. 4) is a region which is suitable for measurement of the thinning rate of the magnetic pipe P because, in the region, the specific permeability µ decreases monotonically as the magnetic flux density B increases. In particular, in a region where the magnetic flux density B is large approximately to an extent at which the magnetic pipe P does not completely reach magnetic saturation, the specific permeability µ decreases linearly as the magnetic flux density B increases. Therefore, in a case where the thinning rate of the magnetic pipe P is measured with use of an inspection probe 100 which is configured so that the magnetic flux density B in this region is applied to the magnetic pipe P, there is a linear relationship between the thinning rate of the magnetic pipe P and an output voltage of the Hall element 3. Hence, the magnet 2 to be used for the inspection probe 100 is preferably a high-performance magnet which generates a strong magnetic field. Examples of the high-performance magnet encompass rare earth magnets such as neodymium magnet.

It should be noted that since the inspection probe 100 is to be inserted into the magnetic pipe P, an inner diameter of the magnetic pipe P is small, so that there is a restriction on the size of a magnet 2 which can be provided in the inspection probe 100. Therefore, with only a single magnet 2, it may not be able to achieve the magnetic flux density of the region γ illustrated in (b) of Fig. 4. In such a case, a desired magnetic flux density B can be achieved with use of, for example, a method in which a plurality of magnets 2 are arranged in a Halbach array.

Fig. 5 is a view illustrating a plurality of test pieces each of which is thinned. (a) of Fig. 5 shows test pieces each of which has an entire surface thinned. (b) of Fig. 5 shows test pieces each of which locally has a thinned portion.

12 types of test pieces, which are thinned as illustrated in (a) and (b) of Fig. 5 were, prepared, and then an output voltage of a Hall element 3 of each of the test pieces was measured. That is, [thinned range, thinning rate] of the test pieces prepared were [45°, 25%], [45°, 50%], [45°, 75%], [90°, 25%], [90°, 50%], [90°, 75%], [135°, 25%], [135°, 50%], [135°, 75%], [360°, 25%], [360°, 50%], and [360°, 75%]. It should be noted that "thinned range" is a range of a thinned portion along a circumference of a cross section which is perpendicular to an axis of a magnetic pipe P and which range is expressed in an angle. For example, a thinned range of 360° indicates that thinning is occurring over an entire circumference of the magnetic pipe P.

Fig. 6 is a view illustrating relationships between (i) output voltages of the Hall elements 3 of the test pieces illustrated in (a) and (b) of Fig. 5 and (ii) respective thinning rates and corresponding thinned ranges of the magnetic pipes P.

As illustrated in Fig. 6, in the case of any of the thinned ranges of 45°, 90°, 135°, and 360°, there is a linear relationship between an output voltage and a thinning rate of a Hall element 3, but slopes of lines vary depending on the thinned range. Specifically, a wider thinned range is directly proportional to a smaller slope. This is because a narrower thinned range causes a magnetic flux to be more likely to avoid a thinned portion so as to flow into a portion which is intact. Specifically, in a case where a thinned range is narrow, a magnetic resistance does not increase even if a thinning rate is increased. Therefore, even if the thinning rate changes, a density of a magnetic flux passing through a Hall element 3 does not change considerably. Therefore, in a case where a thinned range is narrow, a variance in output voltage of a Hall element 3 relative to a variance in thinning rate is small, so that a slope of a line, which indicates a relationship between the output voltage of the Hall element 3 and the thinning rate, shows a large value.

Fig. 7 is a view illustrating relationships between (i) output voltages of Hall elements 3 in the test pieces described above and in magnetic pipes used in actual production models and (ii) corresponding values, which were actually measured (hereinafter referred to as "actual value"), of thinning depths. Note that the actual values of the thinning depths were measured by use of an ultrasonic thickness meter or a submersion rotary ultrasonic thickness measuring method.

Unlike test pieces, magnetic pipes used in actual production models are subjected to thinning in various forms such as gentle thinning and pitting corrosion-like thinning. However, even in the cases of the magnetic pipes used in the actual production models, as illustrated in Fig. 7, there were correlations between the output voltages of the Hall elements 3 and the actual values of the thinning depths, which correlations were approximately so much that a coefficient of determination, R² which is a square value of a correlation coefficient R, was around 0.72.

Therefore, with use of the magnetic pipes used in the actual production models as magnetic pipes for calibration, a relational formula between an output voltage of a Hall element 3 and an actual value of a thinning depth of a magnetic pipe was calculated. Specifically, an approximation line L (Y=aX) was calculated with use of a least squares method. Then, thickness evaluated values were each calculated by (i) calculating a thinning depth of a magnetic pipe from (a) the approximation line L thus calculated and (b) an output value of a magnetic sensor in the magnetic pipe which output value is measured by an inspection probe 100 and (ii) obtaining a difference between a thickness of a magnetic pipe which is intact and the thinning depth thus calculated.

Fig. 8 is a view illustrating relationships between thickness evaluated values and thickness actual values. In Fig. 8, (i) a solid line indicates a relationship of "thickness evaluated value = thickness actual value", (ii) a broken line indicates a relationship of "thickness evaluated value +0.2 mm = thickness actual value", and (iii) a dashed dotted line indicates a relationship of "thickness evaluated value - 0.2 mm = thickness actual value". As illustrated in Fig. 8, there are good correlations between the thickness evaluated values and the thickness actual values. The differences between the thickness evaluated value and the thickness actual values were approximately ±0.2 mm in terms of a thickness. Note that the thickness actual values were measured by use of an ultrasonic thickness meter or a submersion rotary ultrasonic thickness measuring method.

By calculating a relational formula between an output voltage of a Hall element 3 of an inspection probe 100 and an actual value of a thinning depth with use of magnetic pipes used in actual production models and then using the relational formula, it is thus possible to obtain a thinning depth and a thickness of a magnetic pipe from an output voltage of a Hall element 3 which output voltage is measured in an inspection probe 100.

### (3. Configuration of processing section 20)

Fig. 9 is a block diagram illustrating a configuration of a processing section 20 which is included in a thinning measuring device 200 in accordance with the present embodiment. Note that the thinning measuring device 200 in accordance with the present embodiment includes an inspection probe 100 and the processing section 20.

The thinning measuring device 200 in accordance with the present embodiment is configured so that the processing section 20 quantitatively evaluates thinning of a magnetic pipe with use of the Magnetic Flux Resistance according to an output voltage of a Hall element 3 included in the inspection probe 100.

As illustrated in Fig. 9, the processing section 20 includes a detecting section 21, a storage section 22, and a computing section 23. The computing section 23 includes a detected position identifying section 24 and a thinning depth calculating section 25.

The detecting section 21 obtains an output voltage value of a Hall element 3, and then controls the storage section 22 to store the output voltage value and a detected time (detected timing) such that the output voltage value and the detected time are associated with each other.

A configuration of the storage section 22 is not particularly limited. Examples of the storage section 22 encompass storage media such as (i) tapes such as a magnetic tape and a cassette tape, (ii) disks including magnetic disks such as a floppy disk (Registered Trademark) and a hard disk and optical disks such as a CD-ROM, an MO, an MD, a DVD, and a CD-R, (iii) cards such as an IC card (including a memory card) and an optical card, and (iv) semiconductor memories such as a mask ROM, an EPROM, an EEPROM (Registered Trademark), and a flash ROM. The storage section 22 also stores a relational formula that indicates a relationship between an output voltage of a Hall element 3 and a thinning depth of a magnetic pipe, which relationship is calculated in advance with use of magnetic pipes for calibration.

Based on an output voltage value of a Hall element 3 and a corresponding detected time which are stored in the storage section 22, the detected position identifying section 24 identifies a detected position in a magnetic pipe which detected position corresponds to the output voltage value of the Hall element 3.

The thinning depth calculating section 25 determines the presence/absence of thinning and calculates a thinning depth of the magnetic pipe, based on the output voltage of the Hall element 3 and the relational formula indicative of the relationship between an output voltage of the Hall element 3 and a thinning depth of the magnetic pipe, which output voltage and the relational formula are stored in the storage section 22.

Note that the computing section 23 can be an integrated circuit (hardware logic) such as an ASIC (application specific integrated circuit), or can be achieved by a computer executing software, which computer includes a processor such as a CPU. Alternatively, the computing section 23 can be achieved by a combination of such an integrated circuit and software execution of such a computer.

Furthermore, the computing section 23 can be included in a housing in which the detecting section 21 and the storage section 22 are included, or can be included separately from the detecting section 21 and the storage section 22. In the latter case, the computing section 23 (i) obtains information, which is stored in the storage section 22, via, for example, wired communications, wireless communications, or a storage medium which can be attached and detached and then (ii) carries out a computing process.

### (4. Process of measuring thinning)

Fig. 10 is a flow chart illustrating a flow of a process of measuring thinning according to the present embodiment.

First, the inspection probe 100 is inserted into a magnetic pipe to be inspected, and thinning is measured by the Hall element 3 while the inspection probe 100 is being moved axially in the magnetic pipe (S1).

Then, based on information stored in the storage section 22, the detected position identifying section 24 identifies a detected position (position along the axial direction of the magnetic pipe) corresponding to an output voltage value of the Hall element 3 (S2).

Then, the thinning depth calculating section 25 determines the presence/absence of thinning and calculates a thinning depth of the magnetic pipe, based on the output voltage of the Hall element 3 and the relational formula indicative of the relationship between an output voltage of the Hall element 3 and a thinning depth of the magnetic pipe, which output voltage and the relational formula are stored in the storage section 22 (S3). Then, the thinning depth calculating section 25 associates the thinning depth with the detected position identified by the detected position identifying section 24, and the process of measuring thinning ends.

### (5. Variations)

According to the present embodiment, the Hall element 3 is used as a magnetic sensor for detecting a magnetic flux which flows through a magnetic circuit. Alternatively, various magnetic sensors can be used for detecting a change in density of a magnetic flux passing through a magnetic circuit.

According to the present embodiment, the Hall element 3 is provided at the end part of the magnet 2 along a longitudinal direction of the magnetic pipe. However, a position at which the Hall element 3 is to be provided is not limited to such an end part. The Hall element 3 can be provided at any position, provided that the Hall element 3 can detect a density of a magnetic flux flowing through a magnetic circuit which is formed by the magnet 2, the magnetic pipe, and, as necessary, the yoke 1. That is, the Hall element 3 can be provided at any position, provided that the Hall element 3 is located on the magnetic circuit.

According to the present embodiment, the inspection probe 100 includes the single Hall element 3. However, the number of Hall elements 3 is not limited to one. Alternatively, an inspection probe 100 can include a plurality of Hall elements 3. In a case where an inspection probe 100 includes a plurality of Hall elements 3, a yoke 1 has a form of a cylinder or a circular column, and a plurality of magnets 2 are provided at regular intervals along an outer circumference of the yoke 1. Then, the plurality of Hall elements 3 are provided on respective magnetic circuits formed by the plurality of magnets 2 and the yoke 1 so that each of the plurality of Hall elements 3 outputs a large voltage in a case where a density of a magnetic flux flowing through the corresponding magnetic circuit is small. By thus configuring the inspection probe 100, it is possible to obtain an output voltage from each of the plurality of Hall elements 3. Therefore, it is possible to detect thinning and evaluate a thinning rate even in a case where a thinned range is small, so that the thinning occurs locally, so that a magnetic flux avoids the thinning and flows through a portion which is intact. In a case where the inspection probe 100 thus includes a plurality of Hall elements 3, it is possible to evaluate a thinning depth and a thickness more accurately by evaluating the thinning depth and the thickness with use of, of all of output voltages of the respective Hall elements 3, an output voltage which has a largest value.

According to the present embodiment, the magnet 2 is provided in the inspection probe 100 so that the magnet 2 is polarized in a direction in which the magnet 2 faces the magnetic pipe. However, a direction in which the magnet 2 is polarized in the inspection probe 100 is not limited to such a direction, provided that it is possible to achieve the magnetic flux density of the region γ illustrated in (b) of Fig. 4 as described above. For example, the magnet 2 can be provided so that the magnet 2 is polarized in a direction extending parallel to an axis of a magnetic pipe. In such a case also, a Hall element 3 and a yoke 1 only need to be provided on a magnetic circuit formed by the magnet 2 and the magnetic pipe.

According to the present embodiment, the inspection probe 100 includes the yoke 1. However, the inspection probe 100 does not necessarily need to include a yoke 1. Specifically, the inspection probe 100 does not need to include a yoke 1, provided that the magnetic flux density of the region γ illustrated in (b) of Fig. 4 is applied to a magnetic pipe.

According to the present embodiment, (i) the inspection probe 100 is inserted into the magnetic pipe to be inspected and (ii) the determination of the presence/absence of thinning and the calculation of a thinning depth are carried out by the Hall element 3 carries out a measuring process while the inspection probe 100 is being moved axially in the magnetic pipe. However, it is unnecessary to determine the presence/absence of thinning at a single point of a magnetic pipe to be inserted. In addition, in a case where a thinning depth is to be calculated, it is unnecessary to move an inspection probe 100. That is, it is possible to carry out determination of the presence/absence of thinning and measurement of a thinning depth at any position of the magnetic pipe by (i) inserting an inspection probe 100 into a magnetic pipe to be inspected and (ii) measuring an output of a Hall element 3 at any position.

### (Recapitulation)

A defect measuring method in accordance with an aspect of the present invention is a method of measuring a defect of a magnetic member so as to inspect the defect, including the steps of: measuring an output from a magnetic sensor with use of an inspection probe including a magnet and the magnetic sensor which is provided on a magnetic circuit formed by the magnet and the magnetic member and which detects a density of a magnetic flux flowing through the magnetic circuit; and based on the output from the magnetic sensor, (i) determining whether or not the magnetic member has a defect and (ii) calculating a depth of the defect in directions in which the magnetic member and the magnet face each other.

With the method, it is possible to quantitatively measure a defect of a magnetic member by (i) using an inspection probe, which includes a magnet and a magnetic sensor that is provided on a magnetic circuit formed by the magnet and a magnetic member and that detects a magnetic flux flowing through the magnetic circuit, in order to measure an output from the magnetic sensor, (ii) determining the presence/absence of the defect according to the output from the magnetic sensor, and (iii) calculating a depth of the defect.

The defect measuring method can be configured so as to further include the step of: obtaining, before the measuring, a relational formula indicative of a relationship between an output from the magnetic sensor and a depth of a defect of the magnetic member to be inspected, the obtaining being carried out by associating, with use of a calibration magnetic member, an actual value of a depth of a defect of the calibration magnetic member with an output from the magnetic sensor, in the calculating, the depth of the defect of the magnetic member being calculated, based on the relational formula, in accordance with the output from the magnetic sensor.

With the configuration, it is possible to accurately measure a depth of a defect by calculating the depth of the defect of the magnetic member with use of a relational formula indicative of a relationship between an output from the magnetic sensor and a depth of a defect of the magnetic member to be inspected, which relational formula is obtained with use of the calibration magnetic member.

A defect measuring device in accordance with an aspect of the present invention is a defect measuring device including: an inspection probe including a magnet and a magnetic sensor which is provided on a magnetic circuit formed by the magnet and a magnetic member and which detects a density of a magnetic flux flowing through the magnetic circuit; and a defect depth calculating section which, based on an output from the magnetic sensor, (i) determines whether or not the magnetic member has a defect and (ii) calculates a depth of the defect in directions in which the magnetic member and the magnet face each other.

With the configuration, it is possible to quantitatively measure a defect of a magnetic member by (i) using an inspection probe, which includes a magnet and a magnetic sensor that is provided on a magnetic circuit formed by the magnet and a magnetic member and that detects a density of a magnetic flux flowing through the magnetic circuit, in order to measure an output from the magnetic sensor, (ii) determining the presence/absence of the defect according to the output from the magnetic sensor, and (iii) calculating a depth of the defect.

The defect measuring device can be configured to further include: a storage section in which a relational formula indicative of a relationship between an output from the magnetic sensor and a depth of a defect of the magnetic member to be inspected is stored, which relational formula is obtained by associating, with use of a calibration magnetic member, an actual value of a depth of a defect of the calibration magnetic member with an output from the magnetic sensor, the defect depth calculating section calculating, based on the relational formula, the depth of the defect of the magnetic member in accordance with the output from the magnetic sensor.

With the configuration, it is possible to accurately measure a depth of a defect by calculating the depth of the defect of the magnetic member with use of a relational formula indicative of a relationship between an output from the magnetic sensor and a depth of a defect of the magnetic member to be inspected, which relational formula is obtained with use of the calibration magnetic member.

An inspection probe in accordance with an aspect of the present invention is an inspection probe which inspects a defect of a magnetic member, including: a magnet; and a magnetic sensor which is provided on a magnetic circuit formed by the magnet and the magnetic member and which detects a density of a magnetic flux flowing through the magnetic circuit.

According to the configuration, since the magnetic sensor detects a density of a magnetic flux flowing through a magnetic circuit which is formed by the magnet and the magnetic member, a defect of the magnetic member can be quantitatively measured based on a value of an output from the magnetic sensor.

The inspection probe can be configured so that: the magnet is polarized in a direction in which the magnet faces the magnetic member; the inspection probe further includes a yoke which is provided so as to face a surface of the magnet, which surface is opposite a surface which faces the magnetic member; and the magnetic circuit is formed by the magnet, the magnetic member, and the yoke.

With the configuration, it is possible to quantitatively measure a defect of a magnetic member.

### Industrial Applicability

The present invention can be applied to (i) a method and (ii) an inspection probe for use in measurement of the defect.

### Reference Signs List

- 1: Yoke
- 2: Magnet
- 3: Hall element (magnetic sensor)
- 20: Processing section
- 25: Thinning defect depth calculating section (defect depth calculating section)
- 100: Inspection probe
- 200: Thinning measuring device (defect measuring device)
- P: Magnetic pipe (magnetic member)

## Claims

1. A method of measuring a defect of a magnetic member (P) so as to inspect the defect, comprising the steps of:
measuring an output from a magnetic sensor (3) with use of an inspection probe (100) including a magnet (2) and the magnetic sensor which is provided on a magnetic circuit formed by the magnet and the magnetic member and which detects a density of a magnetic flux flowing through the magnetic circuit; and
based on the output from the magnetic sensor, (i) determining whether or not the magnetic member has a defect and (ii) calculating a depth of the defect in directions in which the magnetic member and the magnet face each other,
the magnetic member having a relative permeability (µ) corresponding to a magnetic flux density (B) flowing through the magnetic circuit based on a magnetic field (H) generated by the magnet, the method being **characterised in that**
the magnet generates the magnetic field such that the relative permeability of the magnetic member (P) monotonically decreases as the magnetic flux density increases.

2. The method as set forth in claim 1, further comprising the step of:
obtaining, before the measurement step, a relational formula indicative of a relationship between an output from the magnetic sensor (3) and a depth of a defect of the magnetic member (P) to be inspected, the obtaining being carried out by associating, with use of a calibration magnetic member, an actual value of a depth of a defect of the calibration magnetic member with an output from the magnetic sensor (3),
in the calculating step, the depth of the defect of the magnetic member (P) being calculated, based on the relational formula, in accordance with the output from the magnetic sensor (3).

3. An inspection probe (100) for inspecting a defect of a magnetic member (P), comprising:
a magnet (2) which generates a magnetic field (H); and
a magnetic sensor (3) which is provided on a magnetic circuit formed by the magnet and the magnetic member and which detects a density of a magnetic flux flowing through the magnetic circuit,
the magnetic member having a relative permeability (µ) corresponding to a magnetic flux density (B) flowing through the magnetic circuit based on the magnetic field generated by the magnet, the inspection probe (100) being **characterised in that**
the magnet is a high-performance magnet configured to generate the magnetic field such that the relative permeability of the magnetic member (P) monotonically decreases as the magnetic flux density increases.

4. The inspection probe as set forth in claim wherein:
the magnet is polarized in a direction in which the magnet faces the magnetic member;
the inspection probe further comprises
a yoke (1) which is provided so as to face a surface of the magnet, which surface is opposite a surface which faces the magnetic member (P); and
the magnetic circuit is formed by the magnet (2), the magnetic member (P), and the yoke (1).

5. A defect measuring device (200) comprising:
the inspection probe of claims 3 or 4; a defect depth calculating section (25) which, based on an output from the magnetic sensor (3), is configured to, (i) determine whether or not the magnetic member (P) has a defect and, (ii) calculate a depth of the defect directions in which the magnetic member (P) and the magnet (2) face each other;
a detecting section (21) which is configured to obtain an output voltage value of the magnetic sensor (2) and to control a storage section (22) to store the output voltage and a detected time at which the output voltage value is detected such that the t voltage value and the detected time are associated with each other; and
a detected position identifying section (24) which, based on the output voltage value of the magnetic sensor (3) and the detected time stored in the storage section, is configured to identify a detected position in the magnetic member (P), the detected position corresponding to the output voltage value of the magnetic sensor.

6. The defect measuring device as set forth in claim 5, wherein the storage section (22) is configured to store a relational formula indicative of a relationship between an output from the magnetic sensor (3) and a depth of a defect of the magnetic member (P) to be inspected, which relational formula is obtained by associating, with use of a calibration magnetic member, an actual value of a depth of a defect of the calibration magnetic member with an output from the magnetic sensor (3), the defect depth calculating section (25) being configured to calculate, based on the relational formula, the depth of the defect of the magnetic member (P) in accordance with the output from the magnetic sensor (3).

## Patentansprüche

1. Verfahren zum Messen eines Defekts eines Magnetelements (P) zum Prüfen des Defekts, mit den Schritten:
Messen eines Ausgangssignals von einem Magnetsensor (3) unter Verwendung einer Prüfsonde (100), die einen Magneten (2) und den Magnetsensor enthält, der auf einem durch den Magneten und das Magnetelement gebildeten Magnetkreis vorgesehen ist und eine Dichte eines durch den Magnetkreis fließenden magnetischen Flusses erfasst, und
basierend auf dem Ausgangssignal des Magnetsensors: (i) Bestimmen, ob das Magnetelement einen Defekt aufweist oder nicht, und (ii) Berechnen einer Tiefe des Defekts in Richtungen, in denen das Magnetelement und der Magnet einander zugewandt sind,
wobei das Magnetelement eine relative Permeabilität (µ) aufweist, die einer magnetischen Flussdichte (B) entspricht, die basierend auf einem durch den Magneten erzeugten Magnetfeld (H) durch den Magnetkreis fließt,
wobei das Verfahren **dadurch gekennzeichnet ist, dass**
der Magnet das Magnetfeld derart erzeugt, dass die relative Permeabilität des Magnetelements (P) monoton abnimmt, wenn die magnetische Flussdichte zunimmt.

2. Verfahren nach Anspruch 1, ferner mit dem Schritt:
Erhalten einer Beziehungsformel, die eine Beziehung zwischen einem Ausgangssignal des Magnetsensors und einer Tiefe eines Defekts des zu prüfenden Magnetelements (P) anzeigt, vor dem Messschritt, wobei der Schritt zum Erhalten einer Beziehungsformel ausgeführt wird, indem unter Verwendung eines Kalibrierungsmagnetelements ein Ist-Wert einer Tiefe eines Defekts des Kalibrierungsmagnetelements einem Ausgangssignal des Magnetsensors (3) zugeordnet wird,
wobei im Berechnungsschritt die Tiefe des Defektes des Magnetelements (P) basierend auf der Beziehungsformel gemäß dem Ausgangssignal des Magnetsensors (3) berechnet wird.

3. Prüfsonde (100) zum Prüfen eines Defekts eines Magnetelements (P), mit:
einem Magneten (2), der ein Magnetfeld (H) erzeugt, und
einem Magnetsensor (3), der auf einem durch den Magneten und das Magnetelement gebildeten Magnetkreis vorgesehen ist und der eine Dichte eines durch den Magnetkreis fließenden magnetischen Flusses erfasst,
wobei das Magnetelement eine relative Permeabilität (µ) aufweist, die einer magnetischen Flussdichte (B) entspricht, die basierend auf dem durch den Magneten erzeugten Magnetfeld durch den Magnetkreis fließt, und
die Prüfsonde (100) **dadurch gekennzeichnet ist, dass**
der Magnet ein Hochleistungsmagnet ist, der dafür konfiguriert ist, das Magnetfeld derart zu erzeugen, dass die relative Permeabilität des Magnetelements (P) monoton abnimmt, wenn die magnetische Flussdichte zunimmt.

4. Prüfsonde nach Anspruch 3, wobei:
der Magnet in einer Richtung polarisiert ist, in der der Magnet dem Magnetelement zugewandt ist,
die Prüfsonde ferner aufweist:
ein Joch (1), das derart angeordnet ist, dass es einer Oberfläche des Magneten zugewandt ist, wobei die Oberfläche einer Oberfläche gegenüberliegt, die dem Magnetelement (P) zugewandt ist, und
der Magnetkreis durch den Magneten (2), das Magnetelement (P) und das Joch (1) gebildet wird.

5. Defektmessvorrichtung (200) mit:
der Prüfsonde nach Anspruch 3 oder 4;
einem Defekttiefenberechnungsabschnitt (25), der dafür konfiguriert ist, basierend auf einem Ausgangssignal vom Magnetsensor (3) (i) zu bestimmen, ob das Magnetelement (P) einen Defekt aufweist oder nicht, und (ii) eine Tiefe des Defekts in Richtungen zu berechnen, in denen das Magnetelement (P) und der Magnet (2) einander zugewandt sind,
einem Erfassungsabschnitt (21), der dafür konfiguriert ist, einen Ausgangsspannungswert des Magnetsensors (2) zu erhalten und einen Speicherabschnitt (22) zu steuern, um den Ausgangsspannungswert und eine erfasste Zeit, zu der der Ausgangsspannungswert erfasst wird, derart zu speichern, dass der Ausgangsspannungswert und die erfasste Zeit einander zugeordnet sind, und
einem Abschnitt (24) zum Identifizieren der erfassten Position, der dafür konfiguriert ist, basierend auf dem Ausgangsspannungswert des Magnetsensors (3) und der erfassten Zeit, die im Speicherabschnitt gespeichert sind, eine erfasste Position im Magnetelement (P) zu identifizieren, wobei die erfasste Position dem Ausgangsspannungswert des Magnetsensors entspricht.

6. Defektmessvorrichtung nach Anspruch 5, wobei
der Speicherabschnitt (22) dafür konfiguriert ist, eine Beziehungsformel zu speichern, die eine Beziehung zwischen einem Ausgangssignal des Magnetsensors (3) und einer Tiefe eines Defekts des zu prüfenden Magnetelements (P) anzeigt, wobei die Beziehungsformel erhalten wird, indem unter Verwendung eines Kalibrierungsmagnetelements ein Istwert einer Tiefe eines Defekts des Kalibrierungsmagnetelements einem Ausgangssignal des Magnetsensors (3) zugeordnet wird, wobei der Defekttiefenberechnungsabschnitt (25) dafür konfiguriert ist, die Tiefe des Defekts des Magnetelements (P) basierend auf der Beziehungsformel gemäß dem Ausgangssignal des Magnetsensors (3) zu berechnen.

## Revendications

1. Procédé de mesure d'un défaut d'un élément magnétique (P) de façon à inspecter le défaut, comprenant les étapes consistant à :
mesurer une valeur fournie par un capteur magnétique (3) à l'aide d'une sonde d'inspection (100) comprenant un aimant (2) et le capteur magnétique qui est prévu sur un circuit magnétique formé par l'aimant et l'élément magnétique et qui détecte une densité d'un flux magnétique qui circule à travers le circuit magnétique ; et
sur la base de la valeur fournie par le capteur magnétique, (i) déterminer si l'élément magnétique présente ou non un défaut, et (ii) calculer une profondeur du défaut dans les directions dans lesquelles l'élément magnétique et l'aimant se font face,
l'élément magnétique présentant une perméabilité relative (µ) qui correspond à une densité de flux magnétique (B) qui circule à travers le circuit magnétique sur la base d'un champ magnétique (H) généré par l'aimant,
le procédé étant **caractérisé en ce que** l'aimant génère le champ magnétique de sorte que la perméabilité relative de l'élément magnétique (P) diminue de manière monotone au fur et à mesure que la densité de flux magnétique augmente.

2. Procédé selon la revendication 1, comprenant en outre l'étape consistant à :
obtenir, avant l'étape de mesure, une formule relationnelle qui indique une relation entre une valeur fournie par le capteur magnétique (3) et une profondeur d'un défaut de l'élément magnétique (P) à inspecter, l'obtention étant effectuée en associant, à l'aide d'un élément magnétique de calibrage, une valeur réelle d'une profondeur d'un défaut de l'élément magnétique de calibrage à une valeur fournie par le capteur magnétique (3),
à l'étape de calcul, la profondeur du défaut de l'élément magnétique (P) étant calculée, sur la base de la formule relationnelle, selon la valeur fournie par le capteur magnétique (3).

3. Sonde d'inspection (100) destinée à inspecter un défaut d'un élément magnétique (P), comprenant :
un aimant (2) qui génère un champ magnétique (H) ; et
un capteur magnétique (3) qui est prévu sur un circuit magnétique formé par l'aimant et l'élément magnétique et qui détecte une densité d'un flux magnétique qui circule à travers le circuit magnétique,
l'élément magnétique présentant une perméabilité relative (µ) qui correspond à une densité de flux magnétique (B) qui circule à travers le circuit magnétique sur la base du champ magnétique généré par l'aimant,
la sonde d'inspection (100) étant **caractérisée en ce que** l'aimant est un aimant à hautes performances configuré pour générer le champ magnétique de sorte que la perméabilité relative de l'élément magnétique (P) diminue de manière monotone au fur et à mesure que la densité de flux magnétique augmente.

4. Sonde d'inspection selon la revendication 3, dans laquelle :
l'aimant est polarisé dans une direction dans laquelle l'aimant fait face à l'élément magnétique ;
la sonde d'inspection comprend en outre
une culasse (1) qui est prévue de façon à faire face à une surface de l'aimant, ladite surface étant opposée à une surface qui fait face à l'élément magnétique (P) ; et
le circuit magnétique est formé par l'aimant (2), l'élément magnétique (P) et la culasse (1).

5. Dispositif de mesure de défauts (200) comprenant :
la sonde d'inspection selon la revendication 3 ou 4 ;
une section de calcul de profondeur de défaut (25) qui, sur la base d'une valeur fournie par le capteur magnétique (3), est configurée pour (i) déterminer si l'élément magnétique (P) présente ou non un défaut, et (ii) calculer une profondeur du défaut dans les directions dans lesquelles l'élément magnétique (P) et l'aimant (2) se font face ;
une section de détection (21) qui est configurée pour obtenir une valeur de tension de sortie du capteur magnétique (2) et pour contrôler une section de stockage (22) destinée à stocker la valeur de tension de sortie et un moment détecté auquel la valeur de tension de sortie est détectée de sorte que la valeur de tension de sortie et le moment détecté soient associés l'un à l'autre ; et
une section d'identification de position détectée (24) qui, sur la base de la valeur de tension de sortie du capteur magnétique (3) et du moment détecté stocké dans la section de stockage, est configurée pour identifier une position détectée au sein de l'élément magnétique (P), la position détectée correspondant à la valeur de tension de sortie du capteur magnétique.

6. Dispositif de mesure de défauts selon la revendication 5, dans lequel la section de stockage (22) est configurée pour stocker une formule relationnelle qui indique une relation entre une valeur fournie par le capteur magnétique (3) et une profondeur d'un défaut de l'élément magnétique (P) à inspecter, ladite formule relationnelle étant obtenue en associant, à l'aide d'un élément magnétique de calibrage, une valeur réelle d'une profondeur d'un défaut de l'élément magnétique de calibrage à une valeur fournie par le capteur magnétique (3), la section de calcul de profondeur de défaut (25) étant configurée pour calculer, sur la base de la formule relationnelle, la profondeur du défaut de l'élément magnétique (P) selon la valeur fournie par le capteur magnétique (3).
